# EUROPÄISCHE PATENTSCHRIFT

(11) **EP 0 841 038 B1**
(45) Veröffentlichungstag und Bekanntmachung des Hinweises auf die Patenterteilung: **13.02.2002**
(21) Anmeldenummer: 97117114.5
(22) Anmeldetag: 02.10.1997
(51) Int. Cl.: A61C 17/02, B05B 3/04

(54) **Spritzdüse für eine Munddusche**
Spray nozzle for oral hygiene douche
Buse pour douche buccale

(30) Priorität: 06.11.1996 DE 19645644
(43) Veröffentlichungstag der Anmeldung: 13.05.1998
(73) Patentinhaber: Braun GmbH, Kronberg (DE)
(72) Erfinder: Sauer, Michael, 65520 Bad Camberg (DE); Schaefer, Norbert, 60322 Frankfurt (DE); Stolper, Michael, 65760 Eschborn (DE)

(56) Entgegenhaltungen:
- EP-A- 0 542 698
- EP-A- 0 688 542
- EP-B- 0 175 881
- FR-A- 2 475 939
- US-A- 3 739 983

## Beschreibung

Die Erfindung betrifft eine Spritzdüse für eine Vorrichtung zur Reinigung und Pflege der Zähne und des Zahnfleischs, insbesondere für ein Handstück einer Munddusche, mit einem Düsenkopf, der einen Auslaß aufweist, aus dem eine Flüssigkeit in der Form eines Einzelstrahls austreten kann.

Eine derartige Spritzdüse ist aus der europäischen Patentschrift EP 0 175 881 B2 bekannt. Dort ist eine elektrisch angetriebene Munddusche zur Mund- und Zahnpflege beschrieben, die ein Handstück aufweist, auf das eine Spritzdüse aufgesteckt werden kann. Die Spritzdüse ist mit einem Düsenkopf versehen, der einen Auslaß besitzt, aus dem ein Einzelstrahl austreten kann. Des weiteren sind in dem Düsenkopf Mittel untergebracht, mit denen wahlweise auch der Einzelstrahl aufgefächert und damit ein Mehrfachstrahl erzeugt werden kann. Im eingeschalteten Betriebszustand der Munddusche wird Wasser zu der Spritzdüse und damit zu dem Düsenkopf gepumpt. Mit dem erzeugten Einzel- oder Mehrfachstrahl kann ein Benutzer der Munddusche den Mundraum und insbesondere die Zähne und das Zahnfleisch pflegen und reinigen.

Aufgabe der Erfindung ist es, die bekannte Spritzdüse im Hinblick auf eine verbesserte Pflege- und Reinigungswirkung weiterzuentwickeln.

Diese Aufgabe wird durch die Erfindung dadurch gelöst, daß in dem Düsenkopf ein Schaufelrad untergebracht ist, das um eine Rotationsachse drehbar ist, daß das Schaufelrad eine Bohrung aufweist, die in einem Winkel zu der Rotationsachse angeordnet ist, und daß die Bohrung dazu vorgesehen ist, die Flüssigkeit dem Auslaß zuzuführen.

Im eingeschalteten Betriebszustand der erfindungsgemäßen Vorrichtung wird das Schaufelrad von der zu dem Düsenkopf gepumpten Flüssigkeit in eine Drehung um die Rotationsachse versetzt. Die innerhalb des Schaufelrads verlaufende Bohrung dreht sich damit ebenfalls um die Rotationsachse. Durch die Anordnung der Bohrung in einem Winkel zur Rotationsachse bewegt sich die Bohrung auf dem Mantel eines Kegels. Dies hat zur Folge, daß der aus der Bohrung austretende Einzelstrahl ebenfalls auf dem Mantel eines Kegels umläuft. Damit wird erreicht, daß die durch die Bohrung gepumpte Flüssigkeit sich nach ihrem Austritt aus der Bohrung relativ gleichmäßig als umlaufender Einzelstrahl auf dem Mantel des Kegels verteilt.

Der Einzelstrahl wird also zur Bildung eines Mehrfachstrahls nicht in irgendeiner Weise aufgefächert, sondern er wird als Einzelstrahl aufrechterhalten. Zur Erzeugung der Wirkung eines Mehrfachstrahls wird der Einzelstrahl stattdessen in eine Drehbewegung versetzt, also andauernd umgelenkt.

Dies hat den Vorteil, daß der Einzelstrahl nicht durch eine Auffächerung diffus und damit die Reinigungswirkung des Einzelstrahls vermindert wird, sondern es bleibt die gesamte Reinigungswirkung des konzentrierten Einzelstrahls erhalten. Durch die rotierende Umlenkung des Einzelstrahls werden zusätzlich die Vorteile eines Mehrfachstrahls erreicht, nämlich insbesondere eine einfachere und umfassendere Reinigung einzelner Zähne durch den Benutzer. Insgesamt stellt die Erfindung eine Spritzdüse zur Verfügung, bei der die Vorteile eines Einzelstrahls, insbesondere dessen hohe Reinigungswirkung, auch bei einem Mehrfachstrahl in vollem Umfang vorhanden sind.

Bei einer besonders vorteilhaften Weiterbildung der Erfindung weist der Winkel einen Wert in einem Bereich von etwa 10 Grad bis etwa 40 Grad auf, vorzugsweise einen Wert von etwa 25 Grad. Mit diesen Werten des Winkels zwischen der Rotationsachse und der Bohrung kann ein sich aufweitender Kegel erzeugt werden. Des weiteren kann der Kegel, auf dem der Einzelstrahl umläuft, in einer Größe erzeugt werden, die etwa der Größe eines einzelnen Zahns entspricht.

Damit wird eine besonders gute und umfassende Reinigung der Zähne erreicht. Gleichzeitig erleichtert dies die Handhabung der erfindungsgemäßen Vorrichtung für den Benutzer.

Bei einer vorteilhaften Ausgestaltung der Erfindung weist das Schaufelrad ein Kernstück sowie eine Mehrzahl etwa radial nach außen abstehender Schaufeln auf, wobei die Bohrung in dem Kernstück verläuft und die Eintrittsöffnung der Bohrung zwischen zwei Schaufeln angeordnet ist. Dies stellt insbesondere im Hinblick auf die Herstellung der erfindungsgemäßen Spritzdüse eine besonders einfache und damit kostengünstige Ausgestaltung dar. Besonders zweckmäßig ist es dabei, wenn das Schaufelrad aus Kunststoff insbesondere mittels eines Spritzverfahrens hergestellt wird.

Bei einer weiteren vorteilhaften Ausgestaltung der Erfindung ist der Auslaß des Düsenkopfs koaxial zur Rotationsachse angeordnet, des weiteren ist die Austrittsöffnung der Bohrung ebenfalls in etwa koaxial zu der Rotationsachse angeordnet, wobei die Austrittsöffnung der Bohrung und der Auslaß des Düsenkopfs zueinander benachbart angeordnet sind. Die Austrittsöffnung der Bohrung bildet damit den oberen Teil bzw. die Spitze des Kegels, auf dem der Einzelstrahl umläuft. Der nachfolgend angeordnete Auslaß des Düsenkopfs ist dabei derart ausgestaltet, daß der aus der Bohrung austretende und umlaufende Einzelstrahl von dem Auslaß nicht behindert wird.

Bei einer weiteren vorteilhaften Ausgestaltung der Erfindung ist ein Zufuhrrohr vorgesehen, an dem der Düsenkopf gehalten ist, wobei die Längsachse des Zufuhrrohrs und die Rotationsachse des Schaufelrads einen Abstand zueinander aufweisen. Durch den Abstand wird erreicht, daß die durch das Zufuhrrohr dem Düsenkopf zugeführte Flüssigkeit nicht zentral auf das Schaufelrad auftrifft, sondern außermittig. Dies bedeutet, daß die Flüssigkeit auf die Schaufeln des Schaufelrads trifft und somit das Schaufelrad in eine Rotation versetzt. Durch den Abstand der Längsachse des Zufuhrrohrs und der Rotationsachse des Schaufelrads wird also eine Queranströmung und damit eine Rotation des Schaufelrads auf besonders einfache und trotzdem wirkungsvolle Art und Weise erreicht.

Bei einer vorteilhaften Weiterbildung der Erfindung sind die Längsachse des Zufuhrrohrs und die Rotationsachse des Schaufelrads in einem Winkel zueinander angeordnet, der einen Wert in einem Bereich von etwa 60 Grad bis etwa 90 Grad aufweist, vorzugsweise einen Wert von etwa 75 Grad. Das Zufuhrrohr wird dadurch in Richtung zum Auslaß des Düsenkopfs geneigt. Damit verbessern sich die Strömungsverhältnisse innerhalb des Düsenkopfs, so daß die Umlenkung des Einzelstrahls innerhalb des Düsenkopfs nur eine vernachlässigbare Verringerung der Strömungsgeschwindigkeit des Einzelstrahls zur Folge hat. Die Reinigungswirkung des Einzelstrahls wird damit durch die Rotationsbewegung nicht vermindert.

Bei einer vorteilhaften Ausgestaltung der Erfindung ist der Düsenkopf mit einem Abstandshalter versehen, der den Auslaß des Düsenkopfs vorzugsweise kegelförmig umgibt, etwa koaxial zu der Rotationsachse angeordnet ist, und sich in Richtung der aus dem Auslaß austretenden Flüssigkeit erstreckt. Der Benutzer kann den Düsenkopf mit dem Abstandshalter unmittelbar auf den zu reinigenden Zahn aufsetzen. Durch den Abstandshalter wird gewährleistet, daß der aus dem Düsenkopf austretende Einzelstrahl möglichst nur auf den zu reinigenden Zahn und nicht auch auf benachbarte Zähne auftrifft. Ebenfalls wird durch den Abstandshalter verhindert, daß Spritzwasser ungewollt aus dem Mundraum austritt und gegebenenfalls zu unerwünschten Verunreingungen führt. Insoweit stellt der Abstandshalter einen Spritzschutz dar. Des weiteren kann die Länge des Abstandshalters in Richtung der aus dem Auslaß austretenden Flüssigkeit derart gewählt werden, daß der von dem umlaufenden Einzelstrahl gebildete Kegel gerade etwa die Größe des zu reinigenden Zahns aufweist. Damit wird die Reinigung der Zähne weiter verbessert und die Bedienung der erfindungsgemäßen Vorrichtung für den Benutzer weiter vereinfacht.

Bei einer vorteilhaften Weiterbildung der Erfindung weist der Abstandshalter zumindest eine Einkerbung auf. Durch diese Einkerbung wird erreicht, daß die aus dem Düsenkopf austretende Flüssigkeit auch dann wieder abfließen kann, wenn der Abstandshalter unmittelbar auf einem Zahn aufgesetzt ist.

Des weiteren kann der Abstandshalter von Vorteil Borsten oder Borstenbüschel aufweisen oder auch einstückig dem Düsenkopf angeformt sein.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Dabei bilden alle beschriebenen und/oder dargestellten Merkmale für sich oder in beliebiger Kombination den Gegenstand der Erfindung unabhängig von ihrer Zusammenfassung in den Ansprüchen und deren Rückbeziehung.
- Figur 1: zeigt eine schematische Darstellung eines Ausführungsbeispiels einer erfindungsgemäßen Spritzdüse in einem Schnitt entlang der Ebene I - I der Figur 2, und
- Figur 2: zeigt eine schematische Darstellung der Spritzdüse der Figur 1 in einem Schnitt entlang der Ebene II - II der Figur 1.

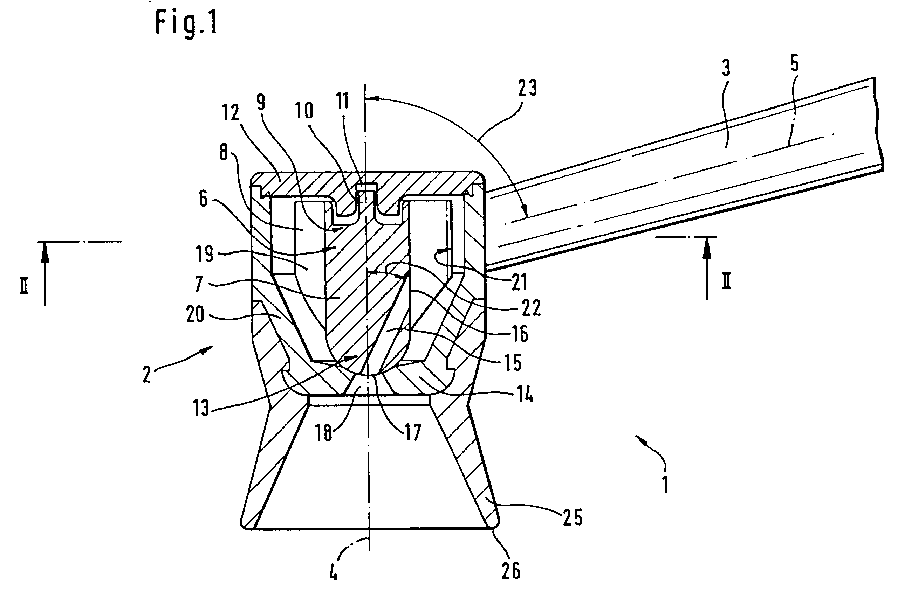

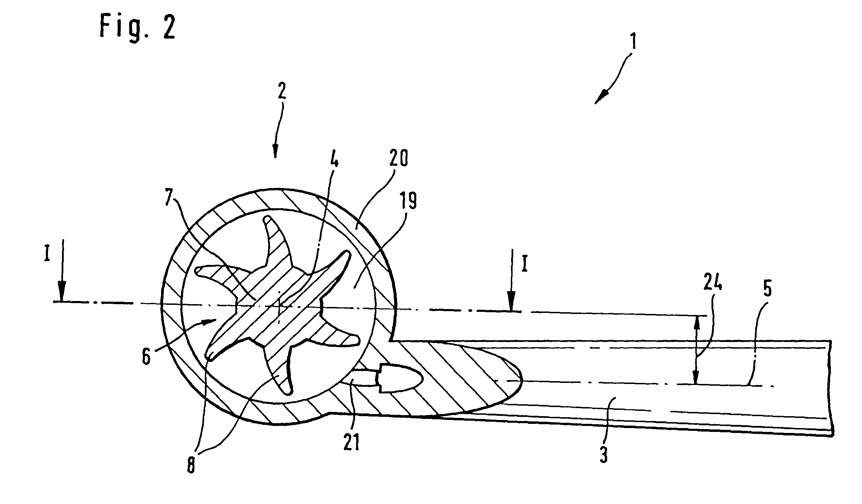

In den Figuren 1 und 2 ist eine Spritzdüse 1 für eine Munddusche dargestellt. Die Spritzdüse 1 kann auf ein Handstück lösbar aufgesteckt werden, das über einen Schlauch mit der Munddusche verbunden ist. Die Munddusche weist einen Flüssigkeitsbehälter auf, der von einem Benutzer mit Wasser gefüllt werden kann. Im Gehäuse der Munddusche ist eine elektromotorisch angetriebene Pumpe untergebracht, mit deren Hilfe das Wasser aus dem Flüssigkeitsbehälter über den Schlauch zu dem Handstück und damit zu der Spritzdüse 1 gepumpt werden kann. Im eingeschalteten Betriebszustand der Munddusche kann der von der Spritzdüse erzeugte Wasserstrahl von dem Benutzer zur Pflege und Reinigung der Zähne und des Zahnfleischs benutzt werden.

Die Spritzdüse 1 weist einen Düsenkopf 2 auf, der mit einem Zufuhrrohr 3 verbunden ist. Der Düsenkopf 2 ist etwa rotationssymmetrisch zu einer Rotationsachse 4 ausgestaltet und das Zufuhrrohr 3 erstreckt sich in Richtung einer Längsachse 5.

Im Inneren des Düsenkopfs 2 ist ein Schaufelrad 6 untergebracht, das ein Kernstück 7 und sechs Schaufeln 8 aufweist. Das Schaufelrad 6 ist im wesentlichen rotationssymmetrisch ausgebildet und koaxial zur Rotationsachse 4 angeordnet.

Das Kernstück 7 ist etwa zylindrisch ausgestaltet und weist an seinem einen Ende 9 einen stiftförmigen Vorsprung 10 auf, der in eine zugeordnete Ausnehmung 11 in der Rückwand 12 des Düsenkopfs 2 eingreift. Der Vorsprung 10 und die Ausnehmung 11 sind koaxial zur Rotationsachse 4 angeordnet. Das andere Ende 13 des Kernstücks 7 ist etwa halbkugelförmig ausgestaltet und liegt derart an der Vorderwand 14 des Düsenkopfs 2 an, daß das Kernstück 7 insgesamt koaxial zur Rotationsachse 4 angeordnet und um die Rotationsachse 4 drehbar ist.

Durch das Kernstück 7 des Schaufelrads 6 erstreckt sich eine Bohrung 15. Die Bohrung 15 verläuft geradlinig von einer Eintrittsöffnung 16 zu einer Austrittsöffnung 17. Die Eintrittsöffnung 16 befindet sich an der Außenfläche des Kernstücks 7 etwa in der Mitte zwischen den beiden Enden 9, 13 des Kernstücks 7. Die Austrittsöffnung 17 befindet sich im Bereich der Spitze des halbkugelförmigen Endes 13 und ist damit annähernd koaxial zur Rotationsachse 4 angeordnet.

Unmittelbar benachbart zu der Austrittsöffnung 17 der Bohrung 15 weist der Düsenkopf 2 in seiner Vorderwand 14 einen Auslaß 18 auf, der koaxial zur Rotationsachse 4 angeordnet ist, und an dessen Rand das halbkugelförmige Ende 13 des Kernstücks 7 anliegt.

Die sechs Schaufeln 8 des Schaufelrads 6 sind in gleichen Abständen am Umfang des Kernstücks 7 angebracht und stehen etwa radial von dem Kernstück 7 nach außen ab. Die Eintrittsöffnung 16 der Bohrung 15 ist zwischen zwei Schaufeln 8 angeordnet. Das Schaufelrad 6 kann in einem Innenraum 19 des Düsenkopfs 2 eine Drehbewegung ausführen, wobei der Innenraum 19 von der Rückwand 12, der Vorderwand 14 und einer etwa zylinderförmigen Seitenwand 20 begrenzt ist. Des weiteren ist der Innenraum 19 über einen Einlaß 21 mit dem Zufuhrrohr 3 verbunden.

Die Bohrung 15 und die Rotationsachse 4 sind in einem Winkel 22 zueinander angeordnet. Die Bohrung 15 ist also schräg zur Rotationsachse 4 angeordnet. Der Winkel 22 besitzt einen Wert in einem Bereich von etwa 10 Grad bis etwa 40 Grad. Vorzugsweise beträgt der Winkel 22 einen Wert von etwa 25 Grad. Der Winkel 22 ist insbesondere der Figur 1 zu entnehmen.

Die Längsachse 5 des Zufuhrrohrs 3 und die Rotationsachse 4 sind in einem Winkel 23 zueinander angeordnet. Das Zufuhrrohr 3 ist also zur Rotationsachse 4 hin geneigt. Der Winkel 23 besitzt einen Wert in einem Bereich von etwa 60 Grad bis etwa 90 Grad. Vorzugsweise beträgt der Winkel 23 einen Wert von etwa 75 Grad. Der Winkel 23 ist insbesondere der Figur 1 zu entnehmen.

Die Längsachse 5 des Zufuhrrohrs 3 und die Rotationsachse 4 sind des weiteren mit einem Abstand 24 zueinander angeordnet. Der Abstand 24 ist derart gewählt, daß das durch den Einlaß 21 in den Innenraum 19 des Düsenkopfs 2 eintretende Wasser auf die Schaufeln 8 des Schaufelrads 6 auftrifft. Der Abstand 24 ist insbesondere der Figur 2 zu entnehmen.

Auf den Düsenkopf 2 ist ein Abstandshalter 25 lösbar aufgesteckt. Der Abstandshalter 25 ist etwa kegelförmig ausgestaltet und umgibt den Auslaß 18 des Düsenkopfs 2. Des weiteren ist der Abstandshalter 25 etwa koaxial zu der Rotationsachse 4 angeordnet und erstreckt sich in Richtung der aus dem Auslaß 18 austretenden Flüssigkeit. Der Abstandshalter 25 kann Einkerbungen oder dergleichen an seinem freien Rand 26 aufweisen.

Im eingeschalteten Betriebszustand der Munddusche wird das Wasser aus dem Flüssigkeitsbehälter zu der Spritzdüse 1 gepumpt. Dort tritt das Wasser von dem Zufuhrrohr 3 über den Einlaß 21 in den Innenraum 19 des Düsenkopfs 2 ein. Aufgrund des Abstands 24 zwischen der Längsachse 5 des Zufuhrrohrs 3 und der Rotationsachse 4 des Schaufelrads 6 trifft das Wasser auf die Schaufeln 8 des Schaufelrads 6 auf. Durch diese Queranstömung wird das Schaufelrad 6 in eine Rotation um die Rotationsachse 4 versetzt.

Vom Innenraum 19 des Düsenkopfs 2 wird das Wasser über die Eintrittsöffnung 16 in die Bohrung 15 des Kernstücks 7 gepumpt. Das Wasser wird durch die Bohrung 15 hindurchgefördert und kommt zu der Austrittsöffnung 17. Dort tritt das Wasser durch den unmittelbar nachfolgenden Auslaß 18 aus dem Düsenkopf 2 wieder aus. Dabei wird durch das Anliegen des halbkugelförmigen Endes 13 des Kernstücks 7 an der Vorderwand 14 des Düsenkopfs 2 erreicht, daß das Wasser im wesentlichen nur durch die Bohrung 15 aus dem Düsenkopf 2 austreten kann.

Durch die Rotation des Schaufelrads 6 wird auch die Bohrung 15 in eine Drehbewegung um die Rotationsachse 4 versetzt. Dies hat zur Folge, daß das durch die Bohrung 15 hindurchtretende Wasser ebenfalls eine Drehbewegung ausführt. Beim Austritt des Wassers aus der Austrittsöffnung 17 besitzt das Wasser damit eine sich andauernd ändernde Richtung, so daß der aus dem Auslaß 18 austretende einzelne Wasserstrahl auf dem Mantel eines Kegels umläuft. Der Wasserstrahl wird also andauernd derart durch die Bohrung 15 umgelenkt, daß er eine Drehbewegung ausführt, die den genannten Kegel bildet. Der Wasserstrahl bildet dabei einen sich aufweitenden Kegel, wobei die Austrittsöffnung 17 der Bohrung 15 den oberen Bereich bzw. die Spitze des Kegels festlegt. Des weiteren wird durch den Winkel 22 zwischen der Bohrung 15 und der Rotationsachse 4 der Öffnungswinkel des Kegels festgelegt.

Die Kegelform des Abstandshalters 25 ist derart gewählt, daß der von dem Wasserstrahl gebildete, sich aufweitende Kegel nicht auf den Abstandshalter 25 auftrifft. Der Öffnungswinkel des Abstandshalter 25 ist also gleich der geringfügig größer gewählt als der Öffnungswinkel des aus dem Auslaß 18 austretenden Wasserstrahls. Die Länge des Abstandshalters 25 in Richtung des austretenden Wassers ist derart gewählt, daß die Größe des durch den Wasserstrahl gebildeten Kegels etwa der Größe eines Zahns entspricht.

## Patentansprüche

1. Spritzdüse (1) für eine Vorrichtung zur Reinigung und Pflege der Zähne und des Zahnfleischs, insbesondere für ein Handstück einer Munddusche, mit einem Düsenkopf (2), der einen Auslaß (18) aufweist, aus dem eine Flüssigkeit in der Form eines Einzelstrahls austreten kann, **dadurch gekennzeichnet, daß** in dem Düsenkopf (2) ein Schaufelrad (6) untergebracht ist, das durch Einwirkung der in den Düsenkopf eintretenden Flüssigkeit um eine Rotationsachse (4) drehbar ist, daß das Schaufelrad (6) eine Bohrung (15) aufweist, die in einem Winkel (22) zu der Rotationsachse (4) angeordnet ist, und daß die Bohrung (15) dazu vorgesehen ist, die Flüssigkeit dem Auslaß (18) zuzuführen.

2. Spritzdüse (1) nach Patentanspruch 1, **dadurch gekennzeichnet, daß** der Winkel (22) einen Wert in einem Bereich von etwa 10 Grad bis etwa 40 Grad aufweist, vorzugsweise einen Wert von etwa 25 Grad (Figur 1).

3. Spritzdüse (1) nach einem der vorhergehenden Patentansprüche, **dadurch gekennzeichnet, daß** das Schaufelrad (6) ein Kernstück (7) sowie eine Mehrzahl etwa radial nach außen abstehender Schaufeln (8) aufweist, daß die Bohrung (15) in dem Kernstück (7) verläuft, und daß die Eintrittsöffnung (16) der Bohrung (15) zwischen zwei Schaufeln (8) angeordnet ist.

4. Spritzdüse (1) nach einem der vorhergehenden Patentansprüche, **dadurch gekennzeichnet, daß** der Auslaß (18) des Düsenkopfs (2) koaxial zur Rotationsachse (4) angeordnet ist, daß die Austrittsöffnung (17) der Bohrung (15) in etwa koaxial zu der Rotationsachse (4) angeordnet ist, und daß die Austrittsöffnung (17) der Bohrung (15) und der Auslaß (18) des Düsenkopfs (2) zueinander benachbart angeordnet sind.

5. Spritzdüse (1) nach einem der vorhergehenden Patentansprüche, **dadurch gekennzeichnet, daß** ein Zufuhrrohr (3) vorgesehen ist, an dem der Düsenkopf (2) gehalten ist, und daß die Längsachse (5) des Zufuhrrohrs (3) und die Rotationsachse (4) des Schaufelrads (6) einen Abstand (24) zueinander aufweisen (Figur 2).

6. Spritzdüse (1) nach Patentanspruch 5, **dadurch gekennzeichnet, daß** die Längsachse (5) des Zufuhrrohrs (3) und die Rotationsachse (4) des Schaufelrads (6) in einem Winkel (23) zueinander angeordnet sind, der einen Wert in einem Bereich von etwa 60 Grad bis etwa 90 Grad aufweist, vorzugsweise einen Wert von etwa 75 Grad (Figur 1).

7. Spritzdüse (1) nach einem der vorhergehenden Patentansprüche, **dadurch gekennzeichnet, daß** der Düsenkopf (2) mit einem Abstandshalter (25) versehen ist, der den Auslaß (18) des Düsenkopfs (2) vorzugsweise kegelförmig umgibt, etwa koaxial zu der Rotationsachse (4) angeordnet ist, und sich in Richtung der aus dem Auslaß (18) austretenden Flüssigkeit erstreckt.

8. Spritzdüse (1) nach Patentanspruch 7, **dadurch gekennzeichnet, daß** der Abstandshalter (25) zumindest eine Einkerbung aufweist.

9. Spritzdüse (1) nach Patentanspruch 7, **dadurch gekennzeichnet, daß** der Abstandshalter (25) aus einem Borstenbündelkranz oder einem Borstenkranz, ähnlich den Borstenbündeln oder Borsten einer Zahnbürste, besteht.

10. Spritzdüse (1) nach Patentanspruch 7, **dadurch gekennzeichnet, daß** der Abstandshalter (25) Bestandteil des Düsenkopfes (2) ist und aus der Seitenwand (20) mit gebildet wird.

11. Vorrichtung zur Reinigung und Pflege der Zähne und des Zahnfleischs mit einer Spritzdüse (1) nach einem der vorhergehenden Patentansprüche.

12. Vorrichtung nach Patentanspruch 11, **dadurch gekennzeichnet, daß** die Spritzdüse (1) insbesondere von dem Handstück der Munddusche trennbar ist.

## Claims

1. A jet nozzle (1) for a device for the cleaning and care of teeth and gums, in particular for a handle section of an oral irrigator, with a nozzle head (2) having a discharge port (18) from which a liquid in the form of a single jet is dischargeable, **characterized in that** the nozzle head (2) receives therein an impeller (6) which is adapted to rotate about an axis of rotation (4) by impact of the liquid entering the nozzle head, that the impeller (6) includes a bore (15) disposed at an angle (22) to the axis of rotation (4), and that the bore (15) is intended to direct the liquid to the discharge port (18).

2. The jet nozzle (1) according to patent claim 1, **characterized in that** the angle (22) has a value in the range from about 10 degrees to about 40 degrees, preferably of about 25 degrees (FIG. 1).

3. The jet nozzle (1) according to any one of the preceding patent claims, **characterized in that** the impeller (6) includes a core piece (7) as well as a plurality of approximately radially outwardly extending blades (8), that the bore (15) extends in the core piece (7), and that the inlet orifice (16) of the bore (15) is arranged between two blades (8).

4. The jet nozzle (1) according to any one of the preceding patent claims, **characterized in that** the discharge port (18) of the nozzle head (2) is arranged coaxially with the axis of rotation (4), that the outlet orifice (17) of the bore (15) is arranged approximately coaxially with the axis of rotation (4), and that the outlet orifice (17) of the bore (15) and the discharge port (18) of the nozzle head (2) are arranged adjacent to one another.

5. The jet nozzle (1) according to any one of the preceding patent claims, **characterized in that** a supply tube (3) is provided on which the nozzle head (2) is mounted, and that the longitudinal axis (5) of the supply tube (3) and the axis of rotation (4) of the impeller (6) are arranged at a relative distance (24) (FIG. 2).

6. The jet nozzle (1) according to patent claim 5, **characterized in that** the longitudinal axis (5) of the supply tube (3) and the axis of rotation (4) of the impeller (6) are disposed at a relative angle (23) in the range from about 60 degrees to about 90 degrees, preferably of about 75 degrees (FIG. 1).

7. The jet nozzle (1) according to any one of the preceding patent claims, **characterized in that** the nozzle head (2) is provided with a spacer (25) which surrounds the discharge port (18) of the nozzle head (2) preferably conically, is arranged approximately coaxially with the axis of rotation (4), and extends in the direction of the liquid exiting from the discharge port (18).

8. The jet nozzle (1) according to patent claim 7, **characterized in that** the spacer (25) includes at least one notch.

9. The jet nozzle (1) according to patent claim 7, **characterized in that** the spacer (25) comprises a ring of bristle tufts or a ring of bristles, similar to the bristle tufts or bristles of a toothbrush.

10. The jet nozzle (1) according to patent claim 7, **characterized in that** the spacer (25) is part of the nozzle head (2) and is integrally formed from the side wall (20).

11. A device for the cleaning and care of teeth and gums, with a jet nozzle (1) according to any one of the preceding patent claims.

12. The device according to patent claim 11, **characterized in that** the jet nozzle (1) is separable in particular from the handle section of the oral irrigator.

## Revendications

1. Buse (1) pour un dispositif de nettoyage et d'entretien des dents et des gencives, en particulier pour la pièce à main d'une douche buccale, comportant une tête de buse (2) qui présente une sortie (18) hors de laquelle peut sortir un liquide en forme d'un jet individuel, **caractérisée en ce que** dans la tête de buse (2) est logée une roue à palettes qui est rotative autour d'un axe de rotation (4) par l'action du liquide entrant dans la tête de buse, **en ce que** la roue à palettes (6) présente un perçage (15) qui est agencé sous un angle (22) par rapport à l'axe de rotation (4), et **en ce que** le perçage (15) est prévu pour amener le liquide à la sortie (18).

2. Buse (1) selon la revendication 1, **caractérisée en ce que** l'angle (22) a une valeur dans une plage d'environ 10 degrés à approximativement 40 degrés, de préférence une valeur d'environ 25 degrés (figure 1).

3. Buse (1) selon l'une quelconque des revendications précédentes, **caractérisée en ce que** la roue à palettes (6) présente un noyau (7) ainsi qu'une multitude de palettes (8) faisant saillie radialement vers l'extérieur, **en ce que** le perçage (15) s'étend dans le noyau (7), et **en ce que** l'orifice d'entrée (16) du perçage (15) est agencé entre deux palettes (8).

4. Buse (1) selon l'une quelconque des revendications précédentes, **caractérisée en ce que** la sortie (18) de la tête de buse (2) est agencée coaxialement par rapport à l'axe de rotation (4), **en ce que** l'orifice de sortie (17) du perçage (15) est agencé approximativement coaxialement par rapport à l'axe de rotation (4) et **en ce que** l'orifice de sortie (17) du perçage (15) et la sortie (18) de la tête de buse (2) sont agencés au voisinage l'un de l'autre.

5. Buse (1) selon l'une quelconque des revendications précédentes, **caractérisée en ce qu'**il est prévu un tube d'amenée (3) sur lequel est maintenue la tête de buse (2), et **en ce que** l'axe longitudinal (5) du tube d'amenée (3) et l'axe de rotation (4) de la roue à palettes (6) présentent une distance (24) l'un de l'autre.

6. Buse (1) selon la revendication 5, **caractérisée en ce que** l'axe longitudinal (5) du tube d'amenée (3) et l'axe de rotation (4) de la roue à palettes (6) sont agencés l'un par rapport à l'autre sous un angle (23) qui a une valeur dans la plage d'environ 60 degrés à environ 90 degrés, de préférence une valeur d'environ 75 degrés (figure 1).

7. Buse (1) selon l'une quelconque des revendications précédentes, **caractérisée en ce que** la tête de buse (2) est pourvue d'un élément d'écartement (25) qui entoure la sortie (18) de la tête de buse (2) de préférence en forme de cône, qui est agencé approximativement coaxialement par rapport à l'axe de rotation (4) et qui s'étend en direction du liquide sortant de la sortie (18).

8. Buse (1) selon la revendication 7, **caractérisée en ce que** l'élément d'écartement (25) présente au moins une entaille.

9. Buse (1) selon la revendication 7, **caractérisée en ce que** l'élément d'écartement (25) est constitué par une couronne de touffes de poils ou d'une couronne de poils, de manière similaire aux touffes de poils ou aux poils d'une brosse à dents.

10. Buse (1) selon la revendication 7, **caractérisée en ce que** l'élément d'écartement (25) fait partie de la tête de buse (2) et est formée conjointement à partir de la paroi latérale (20).

11. Dispositif de nettoyage et d'entretien des dents et des gencives comportant une buse (1) selon l'une quelconque des revendications précédentes.

12. Dispositif selon la revendication 11, **caractérisé en ce que** la buse (1) est en particulier séparable de la pièce à main de la douche buccale.
